(19) Europäisches Patentamt
European Patent Office
Office européen des brevets

(11) **EP 3 438 209 A1**

(12) **EUROPEAN PATENT APPLICATION**
published in accordance with Art. 153(4) EPC

(43) Date of publication:
06.02.2019 Bulletin 2019/06

(21) Application number: 17775622.8

(22) Date of filing: 31.03.2017

(51) Int Cl.:
*C09B 61/00* (2006.01)   *A23L 2/58* (2006.01)
*A23L 5/44* (2016.01)   *C09B 67/20* (2006.01)
*C09B 67/46* (2006.01)

(86) International application number:
**PCT/JP2017/013863**

(87) International publication number:
**WO 2017/171091 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 01.04.2016 JP 2016074772

(71) Applicant: San-Ei Gen F.F.I., INC.
Toyonaka-shi, Osaka 561-8588 (JP)

(72) Inventors:
• **MIYAMOTO, Kanako**
**Toyonaka-shi**
**Osaka 561-8588 (JP)**

• **SAKATA, Makoto**
**Toyonaka-shi**
**Osaka 561-8588 (JP)**
• **MIUCHI, Takeshi**
**Toyonaka-shi**
**Osaka 561-8588 (JP)**
• **NISHIDA, Atsushi**
**Toyonaka-shi**
**Osaka 561-8588 (JP)**

(74) Representative: **Hoffmann Eitle**
**Patent- und Rechtsanwälte PartmbB**
**Arabellastraße 30**
**81925 München (DE)**

(54) **METHOD FOR STABILIZING SOLID DYE**

(57)   The present invention solves the problem of providing a method for stabilizing a solid pigment. The problem is solved by a method for stabilizing at least one solid pigment selected from the group consisting of solid carotenoid pigments and solid curcumin pigments, the method comprising the step of mixing the solid pigment with a lipophilic liquid in an amount of 200 parts by mass or less per 100 parts by mass of the solid pigment.

EP 3 438 209 A1

**Description**

Technical Field

The present invention relates to a method for stabilizing a solid pigment etc.

Background Art

Typical examples of solid pigments that have been widely used for coloring various foods or the like include carotenoid pigments and curcumin pigments.

Carotenoid pigments (in this specification, sometimes simply referred to as "carotenoid") are oil-soluble pigments exhibiting yellow, orange, or red, which are widely present in plants, animals, and microorganisms. Known examples include carrot carotene pigment, paprika pigment, tomato pigment, etc.

In particular, the main component of tomato pigment is called lycopene, which is known to exhibit bright red and have an antioxidant function. Such pigment has been widely used to color foods. However, lycopene, which is oil-soluble, is not suitable for food production as is. Thus, lycopene is used as an oil-in-water emulsified preparation in which a suitable emulsifier or the like is used, or as a preparation in which crystals are dispersed. However, crystalline carotenoid pigments such as lycopene are unstable in water and undergo photodegradation due to fluorescent light etc., or oxidation degradation and/or degradation over time, which disrupts food production. In order to improve the stability of dispersion preparations containing such crystalline carotenoid pigments, various techniques have been studied and disclosed.

Curcumin pigments (in this specification, sometimes simply referred to as "curcumin") are pigments contained in turmeric (turmeric, *Curcuma longa L*.) and exhibit yellow. The bioactivity of curcumin pigments has been also studied.

Regarding the technique of stabilizing carotenoid pigments, Patent Literature 1, for example, suggests a method for inhibiting discoloration of a crystalline carotenoid pigment, the method comprising adding cellulose to a beverage or food containing a crystalline carotenoid pigment and an oleophilic component.

However, further development of a technique for stabilizing carotenoid pigments and curcumin pigments has been desired.

Citation List

Patent Literature

PTL 1: JP2010-178655A

Summary of Invention

Technical Problem

An object of the present invention is to provide a method for stabilizing a solid pigment etc.

Solution to Problem

As a result of extensive research, the inventors found that a solid carotenoid pigment can be stabilized by mixing at least one solid pigment selected from the group consisting of solid carotenoid pigments and solid curcumin pigments with a lipophilic liquid in an amount of 200 parts by mass or less per 100 parts by mass of the solid carotenoid pigment. Based on this finding, the inventors accomplished the invention.

The present invention comprises embodiments described in the following items.

Item 1. A method for stabilizing at least one solid pigment selected from the group consisting of solid carotenoid pigments and solid curcumin pigments,
the method comprising the step of mixing the solid pigment with a lipophilic liquid in an amount of 200 parts by mass or less per 100 parts by mass of the solid pigment.

Item 2. The method according to Item 1, wherein the method suppresses chemical change of the solid pigment itself, or physical instability which the solid pigment provides to a solid-pigment-containing aqueous liquid as a surrounding environment thereof.

Item 3. A pigment preparation comprising at least one solid pigment selected from the group consisting of solid carotenoid pigments and solid curcumin pigments,
the preparation comprising a lipophilic liquid in an amount of 200 parts by mass or less per 100 parts by mass of the solid pigment.

Item 4. The preparation according to Item 3, further comprising water.

Item 5. A method for producing a pigment preparation comprising at least one solid pigment selected from the group consisting of solid carotenoid pigments and solid curcumin pigments,
the method comprising the step of mixing the solid pigment with a lipophilic liquid in an amount of 200 parts by mass or less per 100 parts by mass of the solid carotenoid pigment.

Item 6. The method for producing a pigment preparation according to Item 5, wherein the step of mixing the solid pigment and the lipophilic liquid is performed in an aqueous medium.

Item 7. A food comprising the preparation according to Item 3 or 4.

Item 8. A method for producing a food comprising at least one pigment selected from the group consisting of carotenoid pigments and curcumin pigments,
the method comprising the step of mixing a food raw material with the preparation according to Item 3 or 4.

Item 9. A coated hydrophobic solid particle comprising

(1) a hydrophobic solid particle and
(2) a coating layer directly coating the hydrophobic solid particle, the coating layer comprising a lipophilic liquid and no gas.

Item 10. The coated hydrophobic solid particle according to Item 9, wherein the hydrophobic solid is at least one solid pigment selected from the group consisting of solid carotenoid pigments and solid curcumin pigments.

Item 11. The coated hydrophobic solid particle according to Item 9 or 10, wherein the coating layer further comprises at least one water-soluble polysaccharide selected from the group consisting of gum arabic and gum ghatti.

Item 12. A hydrophobic-solid-particle-containing aqueous preparation comprising

[1] the coated hydrophobic solid particle according to Item 9 or 10, wherein the coating layer further comprises at least one water-soluble polysaccharide selected from the group consisting of gum arabic and gum ghatti, and
[2] water.

Advantageous Effects of Invention

According to the method of the present invention, at least one solid pigment selected from the group consisting of solid carotenoid pigments and solid curcumin pigments can be stabilized.

Description of Embodiments

The present invention provides
a method for stabilizing at least one solid pigment selected from the group consisting of solid carotenoid pigments and solid curcumin pigments;
a preparation comprising at least one solid pigment selected from the group consisting of solid carotenoid pigments and solid curcumin pigments;
a method for producing a preparation comprising at least one solid pigment selected from the group consisting of solid carotenoid pigments and solid curcumin pigments;
a food comprising at least one pigment selected from the group consisting of carotenoid pigments and curcumin pigments;
etc.
The present invention is explained in detail below.

Terms

The symbols and the abbreviations in this specification are to be interpreted as having the general meanings in the related technical field to which the present invention pertains, according to the context of this specification, unless otherwise specified.

In this specification, the terms "comprise" and "contain" encompass the meanings of "consist essentially of" and "consist of."

The steps, treatments, or operations in this specification can be performed at room temperature, unless otherwise specified.

In this specification, room temperature refers to a temperature in a range of 10 to 40°C.

In the specification, the expression "stabilizing a pigment" includes

[1] inhibiting chemical change of the solid pigment itself, specifically, for example, (1) reducing or preventing chemical change (e.g., degradation, oxidization, reduction) of a compound or a pigment that is a composition of the compound, and (2) reducing or preventing discoloration of the pigment; and
[2] suppressing physical instability which is provided by the solid pigment to a solid-pigment-containing liquid used as a surrounding environment, specifically, for example, inhibiting bubbling of a pigment-containing aqueous liquid used as a surrounding environment of the solid-pigment.

As can be understood from the explanation, the stabilization of Item [1] is suitably performed when the solid pigment is present in a solid or liquid environment, and the stabilization of Item [2] is suitably performed when the solid pigment is present in a liquid environment.

In this specification, the term "food raw material" is used when a food raw material is mixed with the carotenoid-pigment-containing preparation of the present invention, and to distinguish it from the food of the present invention. Specifically, in this case, as would be easily understood by a person skilled in the art, the "food raw material" is used for the purpose of including those generally acknowledged as "food" in addition to those generally acknowledged as a "food raw material."

1. Method for Stabilizing at Least One Solid Pigment Selected from the Group Consisting of Solid Carotenoid Pigments and Solid Curcumin Pigments

The method for stabilizing at least one solid pigment selected from the group consisting of solid carotenoid pigments and solid curcumin pigments according to the present invention comprises the step of mixing the solid pigment with a lipophilic liquid in an amount of 200 parts by mass or less per 100 parts by mass of the solid pigment.

1.1. Solid Pigment

At least one solid pigment (in the specification, sometimes simply referred to as "solid pigment used in the present invention" or "solid pigment") selected from the group consisting of solid carotenoid pigments and solid curcumin pigments used in the present invention is preferably a solid at room temperature.

All or part of the solid pigment used in the present invention is preferably a crystal.

The form of the solid pigment used in the present invention is not limited, and it is preferably powder or granule.

Although the lower end of the size of the solid pigment is not limited, the median diameter of the solid pigment is, for example, 0.01 $\mu$m, preferably 0.02 $\mu$m, and more preferably 0.05 $\mu$m.

The size according to the median diameter is generally 5 $\mu$m or less, preferably 2 $\mu$m or less, more preferably 1 $\mu$m or less, even more preferably 0.7 $\mu$m or less, and furthermore preferably 0.5 $\mu$m or less.

The solid pigment having such a size allows the pigment preparation of the present invention, or a food or the like containing the pigment preparation, to exhibit a brighter color.

The at least one solid pigment selected from the group consisting of solid carotenoid pigments and solid curcumin pigments, which is used in the present invention, is not limited, and can be generally used for foods and beverages, drugs, quasi-drugs, cosmetics, or the like.

In this specification, examples of carotenoid pigments are generally available products, including those extracted or purified from natural pigments, such as tomato pigment (lycopene), carrot pigment, *Dunaliella* carotene ($\beta$-carotene, $\alpha$-carotene), marigold pigment (lutein), and *haematococcus* algae pigment (astaxanthin); and synthetic and semisynthetic products, such as, canthaxanthin, $\beta$-carotene, and $\beta$-apocarotenal.

These products can be used in the present invention alone or in a combination of two or more.

The curcumin used in the present invention may be in a form contained in a turmeric pigment or a turmeric extract.

The curcumin used in the present invention is that obtainable from the rhizome of *Curcuma longa* Linne.

Preferably, the curcumin is obtained by subjecting dried turmeric rhizome (turmeric powder) to extraction using warmed ethanol, using a heated oil or fat or propylene glycol, or using hexane or acetone at room temperature or heated hexane or acetone. Crystalline curcumin is more preferable. Crystalline curcumin can be obtained by extracting turmeric powder using hexane and acetone, subjecting the resulting extract to filtration, and drying it to volatilize the solvent. Alternatively, synthesized products may be used.

Conveniently, commercially available turmeric pigments (curcumin powder: crystalline) can be used. Such curcumin powders are available from San-Ei Gen F.F.I., Inc., etc.

1.2. Lipophilic Liquid

The lipophilic liquid used in the present invention is preferably in a liquid form at room temperature.

The lipophilic liquid used in the present invention is one kind of lipophilic substance or a combination of two or more kinds of lipophilic substances.

When the lipophilic liquid used in the present invention is a combination of two or more kinds of lipophilic substances, the lipophilic liquid used in the present invention is in a liquid form when combined, and the lipophilic substances alone are not necessarily in a liquid form.

The solubility of the lipophilic liquid (one kind of lipophilic substance or two or more kinds of lipophilic substances) used in the present invention in water at 20°C is preferably 0.1 w/w% or less, and more preferably 0.01 w/w% or less.

Examples of lipophilic substances contained in the lipophilic liquid include oil-based solvents, silicone oils, and oil-soluble bioactive substances. Specifically, oil-based solvents, and oil-soluble bioactive substances can each be oil, although this is stated just to be sure.

The oil-based solvent is preferably an eatable, drinkable, or ingestable substance, or a substance applicable to a human body.

Examples of the oil-based solvent include

vegetable oils and fats, such as rapeseed oil, palm oil, soybean oil, olive oil, jojoba oil, coconut oil, safflower oil, elemi resin, or mastic resin;

animal oils, such as beef tallow or lard; and

other oil-based solvents, such as sucrose acetate isobutyrate (SAIB), rosin, dammar resin, ester gum, glycerin fatty acid ester, and medium-chain triglycerides (MCT).

Preferable examples of the oil-based solvent include medium-chain triglycerides, sucrose acetate isobutyrate, and vegetable oils and fats.

"Medium-chain triglyceride" (MCT) herein refers to triacylglycerol constituted of medium chain fatty acids each having about 6 to 12, preferably 6 to 10, more preferably 8 to 10 carbon atoms. Any commercially available medium-chain triglycerides can be used, with no particular restriction.

Examples include caprylic acid triglycerides, capric acid triglycerides, caprylic/capric triglycerides, and mixtures thereof.

These oil-based solvents can be used alone or in a combination of two or more.

Examples of the oil-soluble bioactive substance include fat-soluble vitamins, such as cod-liver oil, vitamin A (e.g., retinol), vitamin A oil, vitamin D (e.g., ergocalciferol, cholecalciferol), vitamin $B_2$ butyrate, ascorbic acid fatty acid esters, vitamin E (e.g., tocopherol and tocotrienol), or vitamin K (e.g., phylloquinone and menaquinone); plant-derived essential oils, such as limonene, linalool, nerol, citronellol, geraniol, citral, 1-menthol, eugenol, cinnamic aldehyde, anethole, perillaldehyde, vanillin, or γ-undecalactone; resveratrol, oil-soluble polyphenols, glycosylceramide, sesamin, phosphatidylserine, coenzyme Q10, ubiquinol, or α-lipoic acid; Ω-3 fatty acids, such as α-linolenic acid, eicosapentaenoic acid, or docosahexaenoic acid; Ω-6 fatty acids, such as linoleic acid or γ-linolenic acid; and phytosterol.

The oil-soluble bioactive substances can be used alone or in a combination of two or more.

The solid pigment is stabilized by mixing the solid pigment with the lipophilic liquid in an amount of 200 parts by mass or less per 100 parts by mass of the solid pigment.

The lower end of the amount of the lipophilic liquid is not limited, and is, for example, 0.1, 1, 2, 5, or 10 parts by mass per 100 parts by mass of the solid pigment.

The amount of the lipophilic liquid is 200 parts by mass or less, preferably less than 200 parts by mass, more preferably 150 parts by mass or less, further preferably less than 100 parts by mass, even more preferably less than 100 parts by mass, particularly preferably 80 parts by mass or less, more particularly preferably 60 parts by mass or less, even more particularly preferably 50 parts by mass or less, and most preferably 40 parts by mass or less, per 100 parts by mass of the solid pigment.

The solid pigment and the lipophilic liquid can be mixed by using any method as long as the solid pigment is in contact with the lipophilic liquid. Known mixing methods can be used. Examples of such methods include a method using a wet grinder mill.

In one preferable embodiment of the present invention, mixing can be performed in a medium (preferably, aqueous medium). The mixing method is not limited, and known mixing methods can be used.

In another embodiment of the present invention, mixing is performed, and then the mixture is dispersed in a medium (preferably an aqueous medium), as desired.

The medium may contain other components etc., described below. Examples of the medium (e.g., solvent and dispersion medium) include water, lower alcohols, polyhydric alcohols, and mixtures of two or more of these. Preferable examples of the medium include water, polyhydric alcohols, and mixtures of water and polyhydric alcohols. More preferable examples of the medium include mixtures of water and polyhydric alcohols. The content of the polyhydric alcohol in the "mixture of water and polyhydric alcohol" is not limited, and it is within 1 mass% or more to less than 100 mass%, preferably 3 mass% or more to 80 mass% or less, more preferably 5 mass% or more to 60 mass% or less, even more preferably 8 mass% or more to 50 mass% or less, and furthermore preferably 8 mass% or more to 30 mass% or less.

Examples of the content of the lower alcohol in the mixture of water and lower alcohol are the same as above.

Usable examples of lower alcohol include $C_{1-4}$ lower alcohols, such as methanol, ethanol, propyl alcohol, isopropyl alcohol, butylalcohol, sec-butylalcohol, and isobutyl alcohol. These alcohols can be used alone or in a combination of two or more. Preferable examples of lower alcohol include ethanol.

Examples of polyhydric alcohol include glycerin, diglycerin, triglycerin, polyglycerin, propylene glycol, dipropylene glycol, 1,3-butylene glycol, ethylene glycol, polyethylene glycol, sorbitol, xylitol, maltitol, erythritol, mannitol, etc. These alcohols can be used alone or in a combination of two or more. Preferable examples of polyhydric alcohol include glycerin, sorbitol, xylitol, maltitol, erythritol, and mannitol. When polyhydric alcohol to be used is a solid at room temperature, it is preferably mixed with water or lower alcohol for use.

The amount of a medium used in the present invention is within 100 to 15000 parts by mass, preferably within 200 to 13000 parts by mass, more preferably within 200 to 10000 parts by mass, and even more preferably within 200 to 8000 parts by mass, per 100 parts by mass of the solid pigment.

### 1.3. Others

In a preferable embodiment of the present invention, the solid pigment and the lipophilic liquid can be mixed in the presence of a surfactant.

The surfactant used in the present invention is not limited as long as it is widely used as an emulsifier and/or a dispersant in the field of foods and beverages, drugs, quasi-drugs, or cosmetics.

Specific examples of the surfactant include esters, such as glycerin fatty acid ester, sucrose fatty acid ester, and sorbitan fatty acid ester; phospholipids, such as lecithin, enzymatically decomposed lecithin, and enzymatically modified lecithin; saponins, such as *quillaja* extract, *enju* saponin, soybean saponin, enzymatically modified soybean saponin, tea seed saponin, and yucca foam extract; polysorbates (polysorbate 20, 60, 65, or 80); gum arabic, gum ghatti; and modified starch.

These surfactants can be used alone or in an arbitrary combination of two or more kinds.

Preferable examples include glycerin fatty acid ester, sucrose fatty acid ester, phospholipids, gum arabic, gum ghatti, modified starch, and combinations of two or more of these.

More preferable examples include gum arabic, gum ghatti, modified starch, and combinations of two or more of these.

Even more preferable examples include gum arabic, gum ghatti, and a combination thereof.

In a preferable embodiment of the present invention, the solid pigment and the lipophilic liquid can be mixed in the presence of a gum arabic aqueous solution in which the content of gum arabic to water is 1 mass% or more, preferably 5 mass% or more, more preferably 8 mass% or more, and even more preferably 10 mass% or more. The upper end of the content of gum arabic to water is not limited, and is, for example, 50 mass%, preferably 45 mass%, and more preferably 40 mass%.

In another preferable embodiment of the present invention, the solid pigment and the lipophilic liquid can be mixed in the presence of a gum ghatti aqueous solution in which the content of gum ghatti to water is 1 mass% or more, preferably 5 mass% or more, more preferably 8 mass% or more, and even more preferably 10 mass% or more. The upper end of the content of gum ghatti to water is not limited, and it is, for example, 50 mass%, preferably 35 mass%, and more preferably 25 mass%.

The method for stabilizing a solid pigment according to the present invention includes the following embodiment.

A method for stabilizing at least one solid pigment selected from the group consisting of solid carotenoid pigments and solid curcumin pigments, the method comprising the step of mixing the solid pigment with a lipophilic liquid in an amount of 200 parts by mass or less per 100 parts by mass of the solid pigment.

As mentioned above, examples of the method for stabilizing a solid pigment according to the present invention include a method for stabilizing a solid pigment in an aqueous medium such as a beverage, specifically, a method for reducing or preventing discoloration of a solid pigment in an aqueous medium, and a method for inhibiting bubbling of the solid pigment in an aqueous medium.

The method for stabilizing a solid pigment according to the present invention includes the following preferable embodiment.

A method for stabilizing at least one solid pigment selected from the group consisting of solid carotenoid pigments and solid curcumin pigments in an aqueous medium, the method comprising the step of mixing the solid pigment with a lipophilic liquid in an amount of 200 parts by mass or less per 100 parts by mass of the solid pigment, and at least one member selected from the group consisting of gum arabic, gum ghatti, and modified starch.

## 2. Pigment Preparation (Solid-Pigment-Containing Preparation)

The pigment preparation of the present invention (in this specification, also referred to as the "solid-pigment-containing preparation of the present invention") comprises at least one solid pigment selected from the group consisting of solid carotenoid pigments and solid curcumin pigments, and a lipophilic liquid in an amount of 100 parts by mass or less per 100 parts by mass of the solid pigment.

### 2.1. Solid Pigment

At least one solid pigment selected from the group consisting of solid carotenoid pigments and solid curcumin pigments, which is contained in the solid-pigment-containing preparation of the present invention, is the same as that explained for the stabilizing method of the present invention.

The solid-pigment-containing preparation of the present invention may contain a pigment other than the at least one solid pigment selected from the group consisting of solid carotenoid pigments and solid curcumin pigments.

In this specification, unless otherwise specified, the solid pigment means at least one solid pigment selected from the group consisting of solid carotenoid pigments and solid curcumin pigments, and does not mean other solid pigments.

The amount of the solid pigment is generally 0.1 mass% or more, preferably 0.3 mass% or more, more preferably 0.5 mass% or more, and even more preferably 1 mass% or more based on the entire solid-pigment-containing preparation of the present invention.

When coloring is the goal, specifically, the solid pigment may be added in such an amount that its amount relative to the total amount of the final product to be colored is 0.01 mass% or more.

The amount of the solid pigment is generally 20 mass% or less, preferably 15 mass% or less, and even more preferably 10 mass% or less, based on the entire solid-pigment-containing preparation of the present invention.

The size of the solid pigment is the same as that explained for the stabilizing method of the present invention.

### 2.2. Lipophilic Liquid

The lipophilic liquid contained in the solid-pigment-containing preparation of the present invention is the same as that explained for the stabilizing method of the present invention.

The amount of the lipophilic liquid is generally 0.01 mass% or more, preferably 0.05 mass% or more, more preferably 0.1 mass% or more, even more preferably 0.2 mass% or more, and furthermore preferably 0.3 mass% or more based on the entire solid-pigment-containing preparation of the present invention.

The amount of the lipophilic liquid is generally 10 mass% or less, preferably 5 mass% or less, more preferably 3 mass% or less, even more preferably 1.5 mass% or less, and furthermore preferably less than 1 mass% based on the entire solid-pigment-containing preparation of the present invention.

The amount of the lipophilic liquid to the solid pigment is the same as that explained for the stabilizing method of the present invention.

### 2.3. Other Components

The solid-pigment-containing preparation of the present invention may comprise other components, specifically, components other than the solid pigment and the lipophilic liquid as long as the effect of the present invention is not impaired.

The amounts of other components can be suitably determined according to the kinds and purposes of the components based on common technical knowledge.

Examples of such other components include surfactants, media (e.g., solvents or dispersion media), anti-oxidants, and excipients.

Surfactants that can be used in the present invention are not limited as long as they are widely used as emulsifiers and/or dispersants in the field of foods and beverages, drugs, quasi-drugs, or cosmetics.

Specific examples of the surfactant include esters, such as glycerin fatty acid ester, sucrose fatty acid ester, and sorbitan fatty acid ester; phospholipids, such as lecithin, enzymatically decomposed lecithin, and enzymatically modified lecithin; saponins, such as *quillaja* extract, *enju* saponin, soybean saponin, enzymatically modified soybean saponin, tea seed saponin, and yucca foam extract; polysorbates (polysorbate 20, 60, 65, or 80); gum arabic and gum ghatti; and modified starch.

These surfactants can be used alone or in an arbitrary combination of two or more kinds.

Preferable examples include glycerin fatty acid ester, sucrose fatty acid ester, phospholipids, gum arabic, gum ghatti, modified starch, and combinations of two or more of these.

More preferable examples include glycerin fatty acid ester, sucrose fatty acid ester, gum arabic, gum ghatti, and combinations of two or more of these. Even more preferable examples include gum arabic, gum ghatti, modified starch, and combinations of two or more of these. Furthermore preferable examples include gum arabic, gum ghatti, and a combination of two or more of these.

Examples of glycerin fatty acid ester and sucrose fatty acid ester include those having a high HLB. Specifically, those having an HLB of 10 or more, e.g., those having an HLB of 10 to 16, are desirable.

Preferable examples of glycerin fatty acid ester include polyglyceryl fatty acid esters having a carbon number of 12 to 22 and a polymerization degree of 5 or more. Specific examples include decaglyceryl laurate, decaglyceryl myristate, decaglyceryl palmitate, decaglyceryl stearate, decaglyceryl oleate, decaglyceryl linoleate, decaglyceryl linolenate, decaglyceryl arachidate, decaglyceryl eicosenoate, and decaglyceryl behenate. Preferable examples include decaglyceryl laurate, decaglyceryl stearate, and decaglyceryl oleate.

Specific examples of sucrose fatty acid ester include sucrose monolaurate, sucrose monomyristate, sucrose monopalmitate, sucrose monostearate, and sucrose monooleate. Preferable examples include sucrose monostearate and sucrose monopalmitate.

Preferable examples of phospholipids include plant lecithin, enzymatically modified lecithin, enzymatically decomposed lecithin, fractionated lecithin, and egg yolk lecithin. More preferable examples include plant lecithin and enzymatically decomposed lecithin. Enzymatically modified lecithin is obtained by having phospholipase D act on a mixture of glycerin and "plant lecithin" or "egg yolk lecithin", and mainly contains phosphatidylglycerol. Enzymatically decomposed lecithin is obtained by adjusting the pH of "plant lecithin" or "egg yolk lecithin" in water or in an alkaline aqueous solution, then performing enzyme decomposition at room temperature to high temperature, and subsequently performing extraction with ethanol, isopropyl alcohol, or acetone. The enzymatically decomposed lecithin mainly contains lysolecithin and phosphatidic acid.

Preferable examples of saponins include *quillaja* extract, *enju* saponin, soybean saponin, enzymatically modified soybean saponin, tea seed saponin, yucca foam extract, etc.

As polysorbate, polysorbate 20, polysorbate 60, polysorbate 65, and polysorbate 80 are known and commercially available. In the present invention, one or more of these polysorbates can be used in combination.

When a surfactant is used, the amount of the surfactant differs depending on the kind.

When gum arabic, for example, is used as a surfactant, the amount is generally within 5 to 40 mass%, and preferably within 10 to 35 mass% based on the entire solid-pigment-containing preparation of the present invention.

When gum ghatti, for example, is used as a surfactant, the amount is generally within 1 to 20 mass%, and preferably within 1 to 15 mass%.

Examples of the medium are the same as those described for the stabilizing method of the present invention.

The amount of the medium is generally 50 mass% or more, and preferably 85 mass% or more based on the entire solid-pigment-containing preparation of the present invention.

The amount of the medium is generally less than 100 mass%, and preferably 95 mass% or less based on the entire solid-pigment-containing preparation of the present invention.

The amount of the medium to the solid pigment is the same as that explained for the stabilizing method of the present invention.

Examples of anti-oxidants used in the present invention include ascorbic acids such as L-ascorbic acid and sodium L-ascorbate; ascorbic acid esters, such as L-ascorbyl stearate and L-ascorbyl palmitate; erythorbic acids, such as erythorbic acid and sodium erythorbate; sulfites, such as sodium sulfite, sodium hyposulfite, sodium pyrosulfite, and potassium pyrosulfite; tocopherols, such as $\alpha$-tocopherol and mix tocopherol; dibutylhydroxytoluene (BHT) and butylhydroxyanisole (BHA); ethylenediaminetetraacetic acids, such as calcium disodium ethylenediaminetetraacetate and disodium ethylenediaminetetraacetate; gallic acids, such as gallic acid and propyl gallate; various plant extracts, such as hollyhock flower extract, *Aspergillus terreus* extract, licorice oil extract, edible canna extract, clove extract, essential-oil-removed fennel extract, horseradish extract, sage extract, dropwort extract, tea extract, tempeh extract, *dokudami* (*Houttuynia cordata*) extract, coffee bean extract, sunflower seed extract, pimento extract, grape seed extract, blueberry leaf extract, propolis extract, Hego (*Cyathea fauriei*)-ginkgo(*Ginkgo biloba*) leaf extract, pepper extract, garden balsam extract, Chinese bayberry extract, eucalyptus leaf extract, gentian root extract, rutin extract (red bean whole plant, *Styphnolobium japonicum,* soba whole plant extract), and rosemary extract. Other examples include quercetin, enzymatically decomposed rutin (isoquercitrin), enzymatically decomposed apple extract, sesame oil extract, rapeseed oil extract, rice bran oil extract, enzymatically decomposed rice bran, etc.

The amount of the anti-oxidant can be suitably determined to attain its purpose. For example, when an L-ascorbic acid is used as an anti-oxidant, the amount is 500 parts by mass or less per 100 parts by mass of the solid pigment. The lower end of the amount of the anti-oxidant is not limited, and is, for example, 1 part by mass per 100 parts by mass of the solid pigment.

Examples of excipients used in the present invention include lactose, sucrose, glucose, corn starch, gelatin, starch, dextrin, calcium phosphate, calcium carbonate, natural and synthetic aluminum silicates, magnesium oxide, dried aluminum hydroxide, magnesium stearate, sodium bicarbonate, and dried yeast.

Examples of excipients for preparing a preparation in a liquid form include water, glycerin, propylene glycol, simple syrup, ethanol, ethylene glycol, polyethylene glycol, sorbitol, etc.

The amount is suitably determined to attain the purpose.

The dosage form of the solid-pigment-containing preparation of the present invention can be powders, dust, tablets, capsules, chewable formulations, solutions, syrups, and the like.

In one preferable embodiment of the solid-pigment-containing preparation according to the present invention, the preparation can be a water-containing preparation, and preferably an aqueous preparation.

The solid-pigment-containing preparation of the present invention includes the following preferable embodiment.

A pigment preparation comprising water and at least one solid pigment selected from the group consisting of solid carotenoid pigments and solid curcumin pigments, the preparation comprising a lipophilic liquid in an amount of 200 parts by mass or less per 100 parts by mass of the solid pigment.

The solid-pigment-containing preparation of the present invention also includes the following preferable embodiment.

A pigment preparation comprising water and at least one solid pigment selected from the group consisting of solid carotenoid pigments and solid curcumin pigments, the preparation comprising a lipophilic liquid in an amount of 200 parts by mass or less per 100 parts by mass of the solid pigment, and at least one member selected from the group consisting of gum arabic, gum ghatti, and modified starch.

The solid-pigment-containing preparation according to the present invention can be a powdery preparation in which the water-containing preparation is formed into powders in a standard manner.

The solid-pigment-containing preparation of the present invention is preferably used to color foods and beverages, drugs, quasi-drugs, or cosmetics.

Examples of foods and beverages include various beverages such as milk beverages, *Lactobacillus* beverages, carbonated beverages, fruit-containing beverages (e.g., fruit-juice-containing beverages, fruit-juice-containing soft drinks, fruit-juice-containing carbonated beverages, fruit-pulp-containing beverages), vegetable-containing drinks, vegetable- and fruit-containing drinks, alcoholic beverages such as liqueur, coffee drinks, powdered drinks, sport drinks, or nutritional supplement drinks; tea beverages, such as black tea beverages, green tea beverages, or blended tea beverages (various beverages and tea beverages are included in "beverages"); puddings, such as custard pudding, milk pudding, or fruit-juice-containing pudding; desserts such as jellies, bavarois, or yogurt; frozen desserts, such as milk ice cream, fruit-juice-containing ice cream, soft-serve ice cream, ice lollipops; gum (e.g., stick gum and sugar-coated gum granules) such as chewing gum or bubble gum; chocolates such as coated chocolate (e.g., marble chocolate) and flavored chocolates (e.g., strawberry chocolate, blueberry chocolate, and melon chocolate); candies such as hard candies (e.g., bonbons, butterballs, and marbles), soft candies (e.g., caramel, nougat, gummy candy, and marshmallow), sugar-coated candies, drops, or taffy; soups such as consommé soup or potage soup; liquid seasonings such as vinaigrette dressings, non-oil dressings, ketchup, gravy, or sauce; jams such as strawberry jam, blueberry jam, marmalade, apple jam, apricot jam, preserves, or syrups; fruit liquors such as red wine; processed fruits such as candied cherries, apricots, apples, strawberries, or peaches; and processed farm products such as pickles.

Among these, beverages, desserts (particularly preferably jellies), candies, jams, pickles, and liquid seasonings are preferable, and beverages are more preferable.

Examples of drugs and quasi-drugs include syrup preparations, nutritional supplement drinks, tablets, capsules, tinctures, creams, and ointments.

Among these, nutritional supplement drinks and syrup preparations are preferable.

Examples of cosmetics include toothpastes, shampoos, hair conditioners, body soaps, and cosmetics.

3. Production Method of Solid-Pigment-Containing Preparation

The solid-pigment-containing preparation of the present invention can be produced in accordance with a dosage form by using a conventional method, or a method that conforms to a conventional method.

The solid-pigment-containing preparation of the present invention can be, for example, produced by using a method comprising the step of mixing a solid pigment with a lipophilic liquid in an amount of 100 parts by mass or less per 100 parts by mass of the solid pigment.

As a method of mixing a solid pigment with a lipophilic liquid, the same method as explained for the method for stabilizing the solid pigment of the present invention can be used.

When the solid-pigment-containing preparation of the present invention contains other components, i.e., components other than the solid pigment and the lipophilic liquid, the other components can be mixed at a suitable stage according to the kinds, purposes, etc. of the components during the production of the solid-pigment-containing preparation.

In the production of the solid-pigment-containing preparation of the present invention, homogenization can be further performed after mixing, if needed. The homogenization method is not limited as long as a component such as a solid pigment can be homogeneously dispersed. The homogenization method can be conducted using emulsification and/or dispersion equipment such as a nanomizer, microfluidizer, and homogenizer, or ultrasonic dispersion equipment.

4. Coated Hydrophobic Solid Particle

The present invention also provides a coated hydrophobic solid particle comprising:

(1) a hydrophobic solid particle, and
(2) a coating layer directly coating the hydrophobic solid particle, the coating layer comprising a lipophilic liquid and no gas.

The expression "coating layer directly coating the hydrophobic solid particle" here indicates that the coating layer is in contact with the hydrophobic solid particle.

The expression "no gas" here indicates that the coating layer is substantially or completely free of gas.

The gas here indicates one in the form of gas, and does not indicate a gas completely dissolved in a medium. Specifically, the coating layer may contain dissolved gas.

In this specification, coating includes complete coating or incomplete (partial) coating.

In the coated hydrophobic solid particle of the present invention, whether the hydrophobic solid particle is coated can be easily determined, for example, by microscope observation because the coated hydrophobic solid particle has a smooth form, which is different from the form of the hydrophobic solid particle.

Examples of the coated hydrophobic solid particle include the particle of the solid pigment mentioned above.

Hydrophobic solids used in the present invention are not limited, and can be solid pigments, solid inorganic salts, solid organic salts, sterols, or mixtures thereof generally used for foods and beverages, drugs, quasi-drugs, cosmetics, etc.

The physical instability provided by the coated hydrophobic solid particle to a coated hydrophobic-solid-particle-containing liquid used as a surrounding environment is suitably inhibited. Specifically, for example, bubbling of the solid-particle-containing aqueous liquid used as a surrounding environment is inhibited.

The hydrophobic solid can be preferably a solid pigment, and more preferably at least one solid pigment selected from the group consisting of solid carotenoid pigments and solid curcumin pigments.

The hydrophobic solid can be preferably at least one salt selected from the group consisting of sterol, solid inorganic salts, and solid organic acid salts, and more preferably solid inorganic iron salts (e.g., iron pyrophosphate) and solid inorganic calcium salts (e.g., calcium carbonate and calcium phosphate.)

The form, property, use, etc. of the hydrophobic solid are the same as those for the solid pigment and can be understood from the explanation regarding those for the solid pigment.

Specifically, the size of the hydrophobic solid can be the same as that of the solid pigment explained above.

The lower end of its size is not limited, and the lower end of the median diameter can be 0.01 $\mu$m.

The size according to the median diameter is generally 5 $\mu$m or less, preferably 1 $\mu$m or less, and more preferably 0.5 $\mu$m or less.

It is preferable that the coating layer further comprise at least one water-soluble polysaccharide selected from the group consisting of gum arabic and gum ghatti.

This ensures attaining excellent bubbling inhibition effects.

5. Hydrophobic-Solid-Particle-Containing Aqueous Preparation

The present invention further provides a hydrophobic-solid-particle-containing aqueous preparation comprising [1] the coated hydrophobic solid particle of the present invention wherein the coating layer further comprises at least one water-soluble polysaccharide selected from the group consisting of gum arabic and gum ghatti, and [2] water.

The lower end of the content of the coated hydrophobic solid particle in the aqueous preparation is not limited. It is, for example, 0.05, 0.1, 0.5, 1, 5, 10, 20, 30, 40, 50, or 60 mass%.

The upper end of the content of the coated hydrophobic solid particle in the aqueous preparation is not limited.

It is, for example, 10, 20, 30, 40, 50, 60, or 70 mass%.

The production method of the aqueous preparation is the same as or similar to the method for producing a pigment preparation according to the present invention, and can be understood by referring to the method for producing the pigment preparation according to the present invention described above.

## 6. Food

The food of the present invention comprises the hydrophobic solid particle or the hydrophobic-solid-particle-containing preparation of the present invention.

In the food of the present invention, the hydrophobic solid particle and/or the hydrophobic solid-containing preparation may completely or substantially retain its original characteristics (shape, formulation, property, and a combination of two or more of these), or may not retain its original characteristics. However, the degree of retaining is preferably high.

The condition "substantially" can be determined by confirming that the hydrophobic solid is stabilized.

One preferable embodiment of the food of the present invention is a pigment-containing food comprising at least one pigment selected from the group consisting of carotenoid pigments and curcumin pigments.

Another preferable embodiment of the food of the present invention is an iron-containing food comprising a solid inorganic iron salt (e.g., iron pyrophorate), or a calcium-containing food comprising a solid inorganic calcium salt (e.g., calcium carbonate and calcium phosphate.)

The food of the present invention is preferably a solid-pigment-containing food.

The food of the present invention may contain a pigment other than carotenoid pigments and curcumin pigments.

The food of the present invention may contain a solid pigment other than solid carotenoid pigments and solid curcumin pigments.

Examples of the food include those described for the solid-pigment-containing preparation of the present invention.

## 5. Production Method of Food

The food of the present invention is, for example, produced by a production method comprising the step of mixing the pigment preparation of the present invention with a food raw material.

## 5.1. Food Raw Material

The food raw material used in the present invention is not limited.

As mentioned above, the term "food raw material" is used to include, in addition to those generally acknowledged as a "food raw material", those generally acknowledged as "food."

## Examples

The present invention is detailed below with reference to Examples; however, the present invention is not limited to these.

In the tables of the following Examples, numerals indicating formulations are parts by mass unless otherwise specified.

Materials used in the following Examples are explained below.

Medium-chain fatty acid glyceride (ODO): caprylic acid/capric acid = 3/1, produced by Nisshin OilliO Group, Ltd.
Medium-chain fatty acid glyceride (Scholey 64G): caprylic acid/capric acid = 3/2, produced by Nisshin OilliO Group, Ltd.
Safflower oil: 75% linoleic acid as fatty acid composition.
Sucrose acetate isobutyrate (SAIB): produced by Eastman Chemical Products Inc.
Rice germ oil (rice germ oil gamma 30N): gamma-oryzanol content: 30 mass%; produced by Tsuno Co., Ltd.
Modified starch (purity gum BE): octenyl succinic acid starch sodium, produced by Nippon Scientific Co., Ltd.
Silicone oil: TSA750S, produced by Momentive.
Tea extract (oil-based Sun Catechin E); tea catechin content: 6 mass% or more (MITSUI NORIN)
Turbid citrus-juice-mixed fruit juice (5-fold concentration); turbid citrus-juice-mixed fruit juice 53R (EHIME BEBERAGE)

In the evaluation of the Examples below, "A" indicates excellent, "B" indicates good, and "C" indicates poor.

Test A: Discoloration Prevention Test

Carotenoid pigment preparations of Comparative Examples and Examples having formulations shown in Tables 1 to 8 below were prepared according to the sample preparation method described below.

**Sample Preparation Method**

Crystalline lycopene or carotene was pulverized using a wet grinder (Dyno-Mill KDL, produced by Willy A. Bachofen AG Maschinenfabrik) to produce a crystalline-fine-particle-dispersed composition.

The median diameter was measured with a laser diffraction particle size analyzer (Microtrac MT-3000 II, produced by NIKKISO)

Using carotenoid pigment preparations of Comparative Examples or Examples, beverages shown in Table 1 were prepared according to the beverage preparation method described below. The beverages were stored at room temperature (25°C) for two months.

The beverages after storage were evaluated by using a method of evaluating discoloration prevention effects described below.

Table 1

| Beverage formulation | Comparative Examples 1 to 5 and 7 Examples 1 to 20 and 25 to 27 | Comparative Example 6 Examples 21 to 24 |
|---|---|---|
| High-fructose corn syrup (Brix 75°) | 13.33 | 13.33 |
| Citric acid (anhydrous) | 0.13 | 0.13 |
| Trisodium citrate | 0.08 | 0.08 |
| Vitamin C | 0.02 | 0.02 |
| Ion exchange water | 86.31 | 86.16 |
| 10% aqueous solution of Comparative Examples 1 to 5 and 7, and Examples 1 to 20 and 25 to 27 | 0.15 | - |
| 10% aqueous solution of Comparative Example 6 and Examples 21 to 24 | - | 0.3 |
| Total | 100 | 100 |

**Beverage Preparation Method**

High-fructose corn syrup, citric acid (anhydrous), vitamin C, trisodium citrate, and ion exchange water were mixed and dissolved.

Subsequently, an aqueous solution containing a preparation obtained in a Comparative Example or an Example in an amount of 10% was added thereto, and mixed using a magnet stirrer at 1000 rpm for 10 minutes. The resulting solution was inserted at 93°C into a 200-mL PET bottle in an amount of 100 g.

**Method of Measuring Lycopene Content in Beverage**

Lycopene was extracted by n-hexane from each beverage.

The absorbance of lycopene at a wavelength of maximum absorption (around 474 nm) of n-hexane was measured with a spectrophotometer (V-600 spectrophotometer produced by JASCO Corporation), and the lycopene content (ppm) was obtained according to the following formula.

```
Lycopene content (ppm) = [absorbance x dilution rate x 10000] /

[3450 x sample weighing amount (g)]
```

**Method of Measuring Carotene Content in Beverage**

Carotene was extracted by cyclohexane from each beverage.

The absorbance of carotene at a wavelength of maximum absorption (around 454 nm) of cyclohexane was measured with a spectrophotometer (V-600 spectrophotometer produced by JASCO Corporation), and the carotene content (ppm) was obtained according to the following formula.

```
Carotene content (ppm) = [absorbance x dilution rate x 10000] /
[2450 x sample weighing amount (g)]
```

**Method of Evaluating Discoloration Prevention Effects**

Remain ratio of lycopene or carotene (%)

A (Excellent): 40% or more
B (Good): 5% or more to less than 40%
C (Poor): Less than 5%

Calculation or Visual Evaluation of Cartenoid Remain Ratio (Remain Ratio to Unsterilized Beverage)

Tested subjects in which remain ratios had been measured were rated as A (excellent), B (good), or C (poor) according to the criteria.
Beverages in which remain ratios had not been measured were visually evaluated based on the color at each remain ratio, and rated as A (excellent), B (good), or C (poor).

Test Example 1

Using beverages each containing a preparation of a Comparative Example or an Example having a formulation shown in Table 2 below, the effect of oil and fats [medium-chain fatty acid glyceride (ODO)] added as a lipophilic liquid was examined. Table 2 shows the results. The preparations of the Comparative Example and Examples were prepared by mixing tomato pigment with a gum ghatti aqueous solution containing water, gum ghatti, and propylene glycol, and then mixing with a medium-chain fatty acid glyceride. Subsequently, the preparations were treated with a high-pressure homogenizer (pressure: 500 kg/cm$^2$).

Table 2

| | Comparative Example 1 | Example 1 | Example 2 |
|---|---|---|---|
| Tomato pigment (lycopene) | 1 | 1 | 1 |
| Medium-chain fatty acid glyceride (ODO) | - | 0.3 | 0.8 |
| Gum ghatti | 11 | 11 | 11 |
| Water | 75 | 75.7 | 75.2 |
| Propylene glycol | 13 | 13 | 12 |
| Total | 100 | 100 | 100 |
| Discoloration prevention effects | C | B | B |

This confirms that discoloration prevention effects were obtained by the use of oil and fats.

Test Example 2

Using beverages each containing a preparation of a Comparative Example or an Example having a formulation shown in Table 3 below, the evaluation test was conducted by changing the kind of a dispersion substrate. Table 3 shows the results.

Table 3

| | Comparative Example 2 | Example 3 | Example 4 |
|---|---|---|---|
| Tomato pigment (lycopene) | 1 | 1 | 1 |
| Medium-chain fatty acid glyceride(ODO) | - | 0.3 | 0.8 |

(continued)

|  | Comparative Example 2 | Example 3 | Example 4 |
|---|---|---|---|
| Gum arabic | 23 | 23 | 23 |
| Water | 61 | 63.7 | 63.2 |
| Propylene glycol | 15 | 12 | 12 |
| Total | 100 | 100 | 100 |
| Discoloration prevention effects | C | B | B |

The same results as in Test Example 1 were obtained when gum arabic was used in place of gum ghatti as a dispersion substrate.

Test Example 3

Using beverages each containing a preparation of a Comparative Example or an Example having a formulation shown in Table 4 below, the evaluation test according to the different kind of a lipophilic liquid was conducted. Table 4 shows the results.

EP 3 438 209 A1

Table 4

| | Comparative Example 1 | Example 1 | Example 5 | Example 6 | Example 7 | Example 8 | Example 9 | Example 10 |
|---|---|---|---|---|---|---|---|---|
| Tomato pigment(lycopene) | 1 | 1 | 1 | 1 | 1 | 1 | 1 | 1 |
| Medium-chain fatty acid glyceride (ODO) | - | 0.3 | - | - | - | 0.27 | 0.27 | 0.27 |
| Medium-chain fatty acid glyceride (Scholey 64G) | - | - | 0.3 | - | - | - | - | - |
| Extracted tocopherol | - | - | - | 0.3 | - | - | - | - |
| Safflower oil | - | - | - | - | 0.3 | - | - | - |
| Sucrose acetate isobutyrate | | | | | | 0.03 | - | - |
| Rice germ oil | | | | | | - | 0.03 | - |
| Tea extract | | | | | | - | - | 0.03 |
| Gum ghatti | 11 | 11 | 11 | 11 | 11 | 11 | 11 | 11 |
| Water | 75 | 74.7 | 74.7 | 74.7 | 74.7 | 74.7 | 74.7 | 74.7 |
| Propylene glycol | 13 | 13 | 13 | 13 | 13 | 13 | 13 | 13 |
| Total | 100 | 100 | 100 | 100 | 100 | 100 | 100 | 100 |
| Lycopene remain ratio (%) | 0 | 20 | 14 | 47 | - | - | - | - |
| Discoloration prevention effects | C | B | B | A | B | B | B | B |

Different discoloration prevention effects were obtained by using different lipophilic liquids.

Test Example 4

Using beverages each containing a preparation of a Comparative Example or an Example having a formulation shown in Table 5, the evaluation test according to the different addition amount of oil was conducted. Table 5 shows the results.

Table 5

|  | Example 11 | Example 12 | Example 13 | Example 14 | Example 15 | Example 16 | Example 17 |
|---|---|---|---|---|---|---|---|
| Tomato pigment (lycopene) | 1 | 1 | 1 | 1 | 1 | 1 | 1 |
| Medium-chain fatty acid glyceride (ODO) | 0.03 | 0.04 | 0.05 | 0.1 | 0.3 | 0.5 | 1 |
| Gum ghatti | 11 | 11 | 11 | 11 | 11 | 11 | 11 |
| Water | 74.97 | 74.96 | 74.95 | 74.9 | 74.7 | 74.5 | 74 |
| Propylene glycol | 13 | 13 | 13 | 13 | 13 | 13 | 13 |
| Total | 100 | 100 | 100 | 100 | 100 | 100 | 10C |
| Discoloration prevention effects | B | B | B | B | B | B | B |

Discoloration prevention effects were attained when at least 0.03% or more of oil per 1% of lycopene was used.

Test Example 5

Using beverages each containing a preparation of a Comparative Example or an Example having a formulation shown in Table 6, the evaluation test according to the different diameter of the pigment particle was conducted. Table 6 shows the results.

Table 6

|  | Comparative Example 3 | Example 18 | Comparative Example 4 | Example 19 | Comparative Example 5 | Example 20 |
|---|---|---|---|---|---|---|
| Tomato pigment (lycopene) | 1 | 1 | 1 | 1 | 1 | 1 |
| Medium-chain fatty acid glyceride (ODO) | - | 0.3 | - | 0.3 | - | 0.3 |
| Gum ghatti | 6.5 | 6.5 | 6.5 | 6.5 | 6.5 | 6.5 |
| Water | 73.5 | 73.2 | 73.5 | 73.2 | 73.5 | 73.2 |
| Propylene glycol | 19 | 19 | 19 | 19 | 19 | 19 |
| Total | 100 | 100 | 100 | 100 | 100 | 100 |
| Median diameter | 0.5 $\mu$m | 0.5 $\mu$m | 0.3 $\mu$m | 0.3 $\mu$m | 0.2 $\mu$m | 0.2 $\mu$m |
| Lycopene remain ratio (%) | 0 | 39 | C | 2C | 0 | 22 |
| Discoloration prevention effects | C | B | C | B | C | B |

Even when the pigment particle diameter was different, discoloration prevention effects were obtained when the median diameter was in a range of 0.2 to 0.5 $\mu$m.

Test Example 6

Effects of the powdery preparations of Comparative Examples and Examples having formulations shown in Table 7 were examined. The preparations were prepared by mixing components. Table 7 shows the results.

Table 7

| | Comparative Example 6 | Example 21 | Example 22 | Example 23 | Example 24 |
|---|---|---|---|---|---|
| Tomato pigment (lycopene) | 0.5 | 0.5 | 0.5 | 0.5 | 0.5 |
| Medium-chain fatty acid glyceride (ODO) | - | 0.15 | 0.25 | 0.5 | - |
| Extracted tocopherol | - | - | - | - | 0.15 |
| Gum arabic | 30 | 30 | 30 | 30 | 3C |
| Dextrin | 67.5 | 67.35 | 67.25 | 67 | 67.35 |
| L-ascorbic acid | 2 | 2 | 2 | 2 | 2 |
| Total | 100 | 100 | 100 | 100 | 10C |
| Discoloration prevention effects | C | B | B | B | A |

As with liquid preparations (base preparations), discoloration prevention effects were obtained by adding medium-chain fatty acid glyceride.

Regarding the effects of extracted tocopherol, results similar to those of the liquid preparation were obtained.

Test Example 7

Using beverages each containing a preparation of a Comparative Example or an Example having a formulation shown in Table 8, effects of other carotenoid (β-carotene) were examined. Table 8 shows the results.

Table 8

| | Comparative Example 7 | Example 25 | Example 26 | Example 27 |
|---|---|---|---|---|
| β-carotene | 1 | 1 | 1 | 1 |
| Medium-chain fatty acid glyceride (ODO) | - | 0.1 | 0.3 | 0.5 |
| Gum ghatti | 6.5 | 6.5 | 6.5 | 6.5 |
| Water | 73.5 | 73.4 | 73.2 | 73 |
| Propylene glycol | 19 | 19 | 19 | 19 |
| Total | 100 | 100 | 100 | 100 |
| Carotene remain ratio (%) | 0 | 28 | 22 | 35 |
| Discoloration prevention effects | C | B | B | B |

As with lycopene, when β-carotene was used, discoloration prevention effects were obtained by adding medium-chain fatty acid glyceride.

Test B: Bubbling Test (Test Ba: Bubbling; Test Bb: Bubble Emitting)

**Production of Test Liquid**

A test liquid was produced as follows according to the formulation shown in Table 9.

First, citric acid (anhydrous), trisodium citrate, and an L-ascorbic acid were dissolved in water, and then high-fructose corn syrup and fruit juice were mixed to produce Liquid 1.

Subsequently, 0.4 g of Liquid 2 was added to 16.6 g of Liquid 1 to produce syrup.

20 g of the syrup was mixed with 80 mL of carbonated water to produce a test liquid.

Table 9

| | | (wt%) |
|---|---|---|
| Liquid 1 | High-fructose corn syrup (Brix 75°) | 6.0 |
| | Citric acid (anhydrous) | 0.3 |
| | Trisodium citrate | 0.02 |
| | L-ascorbic acid | 0.02 |
| | Turbid citrus-juice-mixed fruit juice (5 fold concentration) | 1.0 |
| | Ion exchange water | 12.26 |
| Liquid 2 | Sample 10% aqueous solution | 0.4 |
| | Syrup | 20.0 g |
| | Carbonated water | 80.0 mL |

**Bubbling Test Ba: Bubbling Test**

**Test Method**

500 ml of the test liquid was poured into a 1000-ml measuring cylinder (inside diameter: 65 mm) using a funnel (caliber: 100-mm diameter, length: 105 mm). The height of the upper surface of bubbles at the highest position was measured.

When the sample overflowed from the measuring cylinder due to bubbling, the mass of the overflowed sample was measured.

**Evaluation Method**

The rate of the bubble upper-surface height of each sample (the upper-surface height of the liquid in the case of no bubbling) to the bubble upper-surface height of comparison (100%) determined in each test was defined as the bubbling rate. Based on this value, samples were evaluated according to the following criteria.

In Test Example B1, "Comparative Example B1" was a comparison, and in the other test examples, the left-most comparative example shown in each table was a comparison.

Evaluation Criteria of Bubbling Rate

Table 10

| | Bubbling rate (%) relative to Comparative Example (Comparison) |
|---|---|
| A (Excellent) | Less than 100% |
| C (Poor) | 100% or more |
| A (Excellent): Sufficient inhibition of bubbling C (Poor): Insufficient inhibition of bubbling | |

**Bubbling Test Bb: Bubble Emitting Test**

22 ml of the syrup was put into a 110-ml juice bottle ("100 Takujyo" weight: 110 g; bottle length: 131 mm; width: 46 mm; spout: 26.3 hinge; produced by Hakuyo Glass Co., Ltd.), and 88 ml of carbonated water was added thereto to produce a test liquid.

The filled juice bottle was set in a vertical position and horizontally shaken at 140 strokes/min for two hours.

The juice bottle was allowed to stand at 40°C for one hour.

Thereafter, the juice bottle was opened, and the amount of bubbles that had overflowed as a result of opening was measured.

Table 11

| | The bubble emitting rate (%) to Comparative Example |
|---|---|
| A (Excellent) | Less than 100% |
| C (Poor) | 100% or more |
| A (Excellent): Sufficient inhibition of bubble emitting.<br>C (Poor): Insufficient inhibition of bubble emitting. | |

The test results of the samples are summarized in the tables below according to the purposes of test examples. Examples represented by the same numbers among the tables show the same test results.

Test Example B1

Bubbling inhibition effects according to the kind of a lipophilic liquid were examined.
Table 12 shows the results.
From the results, bubbling inhibition effects were confirmed in the Examples of the present invention even when the kind of oil varied.

Table 12

| | Blanc | Comparative Example B1 | Example B1 | Example B2 | Example B3 | Example B4 | Example B5 |
|---|---|---|---|---|---|---|---|
| Tomato pigment (lycopene) | - | 1.0 | 1.0 | 1.0 | 1.0 | 1.0 | 1.C |
| Medium-chain fatty acid glyceride (OOD) | - | - | 0.3 | - | - | - | - |
| Medium-chain fatty acid glyceride (Scholey 64G) | - | - | - | 0.3 | - | - | - |
| Extracted tocopherol | - | - | - | - | 0.3 | - | - |
| Safflower oil | - | - | - | - | - | 0.3 | - |
| Silicone oil | - | - | - | - | - | - | 0.3 |
| Gum ghatti | 6.0 | 6.0 | 6.0 | 6.0 | 6.0 | 6.0 | 6.C |
| Water | 74.0 | 73.0 | 72.7 | 72.7 | 72.7 | 72.7 | 72.7 |
| Propylene glycol | 20.0 | 20.0 | 20.0 | 20.0 | 20.0 | 20.0 | 20.0 |
| Total | 100.0 | 100.0 | 100.0 | 100.0 | 100.0 | 100.0 | 100.0 |
| Test Ba: Bubbling rate (%) | 92 | 100 | 89 | 94 | 96 | 90 | 85 |
| Test Ba: Bubbling inhibition effects | - | C | A | A | A | A | A |
| Test Bb: Bubble emitting amount | - | (g) 3.9 | - | - | 2.4 | - | - |
| Test Bb: Bubble emitting rate (%) | - | 100 | - | - | 62 | - | - |
| Test Bb: Bubbling inhibition effects | - | C | - | - | A | - | - |

Test Example B2

Bubbling inhibition effects according to the oil addition amount were examined.
Table 13 shows the results.
As the oil addition amount increased, bubbling inhibition effects tended to increase.

Table 13

| | Comparative Example B1 | Example B6 | Example B7 | Example B8 | Example B1 | Example B9 | Example B10 | Example B11 |
|---|---|---|---|---|---|---|---|---|
| Tomato pigment (lycopene) | 1.0 | 1.0 | 1.0 | 1.0 | 1.0 | 1.0 | 1.0 | 1.0 |
| Medium-chain fatty acid glyceride (OOD) | - | 0.03 | 0.05 | 0.1 | 0.3 | 0.5 | 0.8 | 1.0 |
| Gum ghatti | 6.0 | 6.0 | 6.0 | 6.0 | 6.0 | 6.0 | 6.0 | 6.0 |
| Water | 73.0 | 73.0 | 73.0 | 72.9 | 72.7 | 72.5 | 72.2 | 72.0 |
| Propylene glycol | 20.0 | 20.0 | 20.0 | 20.0 | 20.0 | 20.0 | 20.0 | 20.0 |
| Total | 100.0 | 100.0 | 100.0 | 100.0 | 100.0 | 100.0 | 100.0 | 100.0 |
| Test Ba: bubbling rate (%) | 100 | 99 | 95 | 92 | 89 | 81 | 80 | 75 |
| Test Ba: bubbling inhibition effects | C | A | A | A | A | A | A | A |
| Test Bb: Bubble emitting amount (g) | 3.9 | - | - | - | - | 1.8 | - | 1.5 |
| Test Bb: Bubble emitting rate (%) | 100 | - | - | - | - | 46 | - | 38 |
| Test Bb: Bubbling inhibition effects | C | - | - | - | - | A | - | A |

Test Example B3

Using other carotenoid, or iron or curcumin (turmeric pigment), bubbling inhibition effects were examined.

Tables 14 to 16 show the results.

Bubbling inhibition effects were also confirmed when other carotenoid, or iron or curcumin (turmeric pigment) was used.

Table 14

| | Comparative Example B2 | Example B12 | Example B13 |
|---|---|---|---|
| β-carotene | 1.0 | 1.0 | 1.0 |
| Medium-chain fatty acid glyceride (OOD) | - | 0.3 | 0.5 |
| Gum ghatti | 6.0 | 6.0 | 6.0 |
| Water | 73.0 | 72.7 | 72.5 |
| Propylene glycol | 20.0 | 20.0 | 20.0 |
| Total | 100.0 | 100.0 | 100.0 |
| Test Ba: Bubbling amount (ml) | 900 | 860 | 780 |
| Test Ba: Bubbling rate (%) | 100 | 96 | 87 |
| Test Ba: Bubbling inhibition effects | C | A | A |

Table 15

| | Comparative Example B3 | Example B14 | Example B15 |
|---|---|---|---|
| Ferric pyrophosphate | 10.0 | 10.0 | 10.0 |
| Medium-chain fatty acid glyceride (OOD) | - | 0.3 | - |
| Extracted tocopherol | - | - | 0.3 |
| Gum ghatti | 3.0 | 3.0 | 3.0 |
| Water | 39.0 | 38.7 | 38.7 |
| Glycerin | 48.0 | 48.0 | 48.0 |
| Total | 100.0 | 100.0 | 100.0 |
| Test Ba: Bubbling amount (ml) | 850 | 700 | 750 |
| Test Ba: Bubbling rate | 100 | 82 | 88 |
| Test Ba: Bubbling inhibition effects | C | A | A |
| Test Bb: Bubble emitting amount (g) | 1.5 | 0.8 | 1.0 |
| Test Bb: Bubble emitting rate (%) | 100 | 53 | 67 |
| Test Bb: Bubbling inhibition effects | C | A | A |

Table 16

| | Comparative Example B4 | Example B16 | Example B17 |
|---|---|---|---|
| Turmeric pigment | 10.6 | 10.0 | 10.0 |
| Medium-chain fatty acid glyceride (OOD) | - | 0.3 | - |
| Extracted tocopherol | - | - | 0.3 |
| Gum ghatti | 4.0 | 4.0 | 4.0 |
| Water | 39.4 | 39.7 | 39.7 |
| Glycerin | 46.0 | 46.0 | 46.0 |
| Total | 100.0 | 100.0 | 100.0 |
| Test Ba: Bubbling amount (ml) | 800 | 740 | 760 |
| Test Ba: Bubbling rate | 100 | 93 | 95 |

(continued)

| , | Comparative Example B4 | Example B16 | Example B17 |
|---|---|---|---|
| Test Ba: Bubbling inhibition effects | C | A | A |
| Test Bb: Bubble emitting amount (g) | 2.3 | - | 1.9 |
| Test Bb: Bubble emitting rate (%) | 100 | - | 83 |
| Test Bb: Bubbling inhibition effects | C | - | A |

Test Example B4

Bubbling inhibition effects obtained when gum arabic was used were examined.
Table 17 shows the results.
In Comparative Example B5, when carbonated water was poured into syrup, an excessive amount of bubbles was generated and overflowed from a 1000-ml measuring cylinder; the total amount of carbonated water was not able to be poured. On the other hand, the bubbling amounts in Examples B18 and B19 are as shown in Table 17.
The results indicate that bubbling inhibition effects were also confirmed when gum arabic was used.

Table 17

| | Comparative Example B5 | Example B18 | Example B19 |
|---|---|---|---|
| Tomato pigment (lycopene) | 1.0 | 1.0 | 1.0 |
| Medium-chain fatty acid glyceride (OOD) | - | 0.3 | 1.0 |
| Gum arabic | 23.0 | 23.0 | 23.0 |
| Water | 63.0 | 62.7 | 63.0 |
| Propylene glycol | 13.0 | 13.0 | 12.0 |
| Total | 100.0 | 100.0 | 100.0 |
| Test Ba: Bubbling amount(ml) | - | 930 | 700 |
| Test Ba: Bubbling rate | >100 | - | - |
| Test Ba: Bubbling inhibition effects | C | A | A |

**Claims**

1.  A method for stabilizing at least one solid pigment selected from the group consisting of solid carotenoid pigments and solid curcumin pigments,
    the method comprising the step of mixing the solid pigment with a lipophilic liquid in an amount of 200 parts by mass or less per 100 parts by mass of the solid pigment.

2.  The method according to claim 1, wherein the method suppresses chemical change of the solid pigment itself, or physical instability which the solid pigment provides to a solid-pigment-containing aqueous liquid used as a surrounding environment thereof.

3.  A pigment preparation comprising at least one solid pigment selected from the group consisting of solid carotenoid pigments and solid curcumin pigments,
    the preparation comprising a lipophilic liquid in an amount of 200 parts by mass or less per 100 parts by mass of the solid pigment.

4.  The preparation according to claim 3, further comprising water.

5.  A method for producing a pigment preparation comprising at least one solid pigment selected from the group consisting of solid carotenoid pigments and solid curcumin pigments,
    the method comprising the step of mixing the solid pigment with a lipophilic liquid in an amount of 200 parts by mass or less per 100 parts by mass of the solid carotenoid pigment.

6.  The method for producing a pigment preparation according to claim 5, wherein the step of mixing the solid pigment and the lipophilic liquid is performed in an aqueous medium.

7. A food comprising the preparation according to claim 3 or 4.

8. A method for producing a food comprising at least one pigment selected from the group consisting of carotenoid pigments and curcumin pigments,
the method comprising the step of mixing a food raw material with the preparation according to claim 3 or 4.

9. A coated hydrophobic solid particle comprising

   (1) a hydrophobic solid particle and
   (2) a coating layer directly coating the hydrophobic solid particle, the coating layer comprising a lipophilic liquid and no gas.

10. The coated hydrophobic solid particle according to claim 9, wherein the hydrophobic solid is at least one solid pigment selected from the group consisting of solid carotenoid pigments and solid curcumin pigments.

11. The coated hydrophobic solid particle according to claim 9 or 10, wherein the coating layer further comprises at least one water-soluble polysaccharide selected from the group consisting of gum arabic and gum ghatti.

12. A hydrophobic-solid-particle-containing aqueous preparation comprising

   [1] the coated hydrophobic solid particle according to claim 9 or 10, wherein the coating layer further comprises at least one water-soluble polysaccharide selected from the group consisting of gum arabic and gum ghatti, and
   [2] water.

## INTERNATIONAL SEARCH REPORT

International application No.

PCT/JP2017/013863

A.  CLASSIFICATION OF SUBJECT MATTER
*C09B61/00*(2006.01)i, *A23L2/58*(2006.01)i, *A23L5/44*(2016.01)i, *C09B67/20* (2006.01)i, *C09B67/46*(2006.01)i

According to International Patent Classification (IPC) or to both national classification and IPC

B.  FIELDS SEARCHED

Minimum documentation searched (classification system followed by classification symbols)
C09B61/00, A23L2/58, A23L5/44, C09B67/20, C09B67/46

Documentation searched other than minimum documentation to the extent that such documents are included in the fields searched
Jitsuyo Shinan Koho        1922–1996    Jitsuyo Shinan Toroku Koho    1996–2017
Kokai Jitsuyo Shinan Koho    1971–2017    Toroku Jitsuyo Shinan Koho    1994–2017

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y | JP 9-084566 A  (San-Ei Gen F.F.I., Inc.),<br>31 March 1997 (31.03.1997),<br>claims; examples; paragraphs [0004] to [0008]<br>(Family: none) | 1-12<br>1-8,11-12 |
| X<br>Y | JP 2008-063476 A  (T. Hasegawa Co., Ltd.),<br>21 March 2008 (21.03.2008),<br>claims; examples<br>(Family: none) | 1-10<br>1-8,11-12 |
| X<br>Y | JP 2014-036638 A  (Taisho Technos Co., Ltd.),<br>27 February 2014 (27.02.2014),<br>claims; examples; paragraphs [0016] to [0018]<br>& JP 5280571 B2 | 1-10<br>1-8,11-12 |

☒  Further documents are listed in the continuation of Box C.        ☐  See patent family annex.

| | |
|---|---|
| *     Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| 07 June 2017 (07.06.17) | 20 June 2017 (20.06.17) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

# EP 3 438 209 A1

**INTERNATIONAL SEARCH REPORT**

International application No.

PCT/JP2017/013863

C (Continuation).    DOCUMENTS CONSIDERED TO BE RELEVANT

| Category* | Citation of document, with indication, where appropriate, of the relevant passages | Relevant to claim No. |
|---|---|---|
| X <br> Y | JP 2011-157517 A (Toyo Ink SC Holdings Co., Ltd.), <br> 18 August 2011 (18.08.2011), <br> claims; paragraphs [0008] to [0023]; examples <br> (Family: none) | 1-12 <br> 1-8,11-12 |
| X <br> Y | JP 2005-500157 A (Bio-Dar Ltd.), <br> 06 January 2005 (06.01.2005), <br> claims; examples; paragraphs [0022], [0027] <br> & US 2003/0064133 A1 <br> claims; examples; paragraphs [0030], [0037] <br> & WO 2003/018186 A1      & EP 1419005 A1 | 1-12 <br> 1-8,11-12 |
| X <br> Y | JP 2002-187837 A (Kuraray Co., Ltd.), <br> 05 July 2002 (05.07.2002), <br> claims; examples; paragraph [0016] <br> (Family: none) | 9-10 <br> 1-8,11-12 |
| X <br> Y | JP 2010-178655 A (San-Ei Gen F.F.I., Inc.), <br> 19 August 2010 (19.08.2010), <br> examples; paragraph [0039] <br> (Family: none) | 9-12 <br> 1-8,11-12 |
| P,A | JP 2016-098364 A (T. Hasegawa Co., Ltd.), <br> 30 May 2016 (30.05.2016), <br> claims; examples <br> & CN 105614653 A | 1-12 |
| P,A | JP 2016-098365 A (T. Hasegawa Co., Ltd.), <br> 30 May 2016 (30.05.2016), <br> claims; examples <br> & CN 105614653 A | 1-12 |
| A | JP 11-285359 A (BASF AG.), <br> 19 October 1999 (19.10.1999), <br> claims; examples; paragraph [0010] <br> & US 6827941 B1         & EP 930022 A2 <br> & CN 1228937 A | 1-12 |

Form PCT/ISA/210 (continuation of second sheet) (January 2015)

**INTERNATIONAL SEARCH REPORT**

| International application No. |
|---|
| PCT/JP2017/013863 |

Object to be covered by this search:
The invention of claims 9, 11 and 12 contains an extremely large number of kinds of particles as hydrophobic solid particles.

However, only a few kinds of hydrophobic solid particles among the claimed hydrophobic solid particles are disclosed within the meaning of PCT Article 5. Consequently, the invention of claims 9, 11 and 12 is not fully supported within the meaning of PCT Article 6.

Consequently, this international search has been carried out mainly on those disclosed and supported by the description, namely on those wherein the hydrophobic solid particles are composed of a carotenoid dye or a curcumin dye.

Form PCT/ISA/210 (extra sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010178655 A